# EUROPÄISCHE PATENTSCHRIFT

(11) **EP 2 400 155 B1**
(45) Veröffentlichungstag und Bekanntmachung des Hinweises auf die Patenterteilung: **29.07.2015**
(21) Anmeldenummer: 11171123.0
(22) Anmeldetag: 23.06.2011
(51) Int. Cl.: F03D 11/00

(54) **Vorrichtung zur Beheizung von Wettermasten einer Windturbine**
Device for heating weather masts in wind turbine
Dispositif de chauffage de stations météo d'éoliennes

(30) Priorität: 23.06.2010 DE 202010009461 U
(43) Veröffentlichungstag der Anmeldung: 28.12.2011
(73) Patentinhaber: Nordex Energy GmbH, 18059 Rostock (DE)
(72) Erfinder: Kathöfer, Sebastian, 17168 Groß Wüstenfelde (DE)
(74) Vertreter: Garrels, Sabine

(56) Entgegenhaltungen:
- DE-B1- 2 916 504

## Beschreibung

### Beschreibung

Die Erfindung betrifft eine Vorrichtung zur Beheizung von Wettermasten an Windenergieanlagen.

### Stand der Technik

Auf Windenergieanlagen werden zur Bestimmung der Windgeschwindigkeit und der Windrichtung verschiedene Arten von Anemometern und Windfahnen eingesetzt. Diese sind an Wettermasten befestigt, welche sich üblicherweise auf dem Dach der Gondel der Windenergieanlage befinden. Die Wettermasten bestehen jeweils aus einem Ständer und einem Blitzschutzkäfig, welcher die auf dem Wettermast montierten Sensoren zum Schutz vor Blitzschlag umgibt. Unter bestimmten meteorologischen Bedingungen, speziell zwischen 0 und -10 °C vereisen außen liegende Komponenten von Windenergieanlagen, wie beispielsweise Windsensoren und Wettermasten. Dies kann zu unerwünscht hohen mechanischen Belastungen und zu Ungenauigkeiten in den Messungen führen.

Gegenmaßnahmen, wie die in der DE 202006000816 U1 beschriebenen beheizten Windsensoren, helfen hier nur bedingt weiter, da auch die Blitzschutzkäfige der Wettermasten vereisen. Dieser Eisansatz verändert die Strömungsverhältnisse am Windsensor, wodurch die Messwerte stark verfälscht werden.

Der Verzicht auf einen umhüllenden Blitzschutzkäfig (Faradayscher Käfig) führt erfahrungsgemäß zur Zerstörung der Windsensoren bei Blitzeinschlag.

In EP 2154364 A1 wird eine Windenergieanlage offenbart, bei welcher ein Kühlluftauslass der Gondel auf die Anemometer gerichtet ist und somit die Abwärme des Rotors für eine Erwärmung der Umgebungsluft der Anemometer sorgen soll. Nachteil dieser Veröffentlichung ist es, dass durch den Abluftstrom die ungestörte Windmessung beeinträchtigt wird und es zu Verfälschungen der Messergebnisse, insbesondere der Messung der Windrichtung, kommt.

DE 2916504 B1 offenbart Schalensterne für Anemometer oder Windräder zur Energieerzeugung, welche in den Schalen einfache Heizvorrichtungen, z. B. Folien, Drähte oder Bänder, aufweisen.

### Darstellung der Erfindung

Die Aufgabe der Erfindung ist es, die Nachteile des Standes der Technik zu beseitigen und die Wettermasten einer Windenergieanlage eisfrei zu halten.

Die erfindungsgemäße Idee besteht darin, den Wettermast aus miteinander verbundenen Rohrleitungen zu fertigen. Üblicherweise ist der Wettermast aus Vollprofilen hergestellt. Der Querschnitt der Profile ist so bemessen, dass sie über einen hohen elektrischen Leitwert verfügen und den Blitzstrom sicher ableiten. Erfindungsgemäß werden diese Vollprofile durch Rohrleitungen ersetzt, die es ermöglichen, dem Wettermast gezielt Wärme zuzuführen, um ihn eisfrei zu halten. Die Wandstärke der Rohre wird so ausgelegt, dass eine Ableitung des Blitzstroms gewährleistet wird.

In einer bevorzugten Ausgestaltung ist in den Rohrleitungen eine Heizung angeordnet. Die Heizung wird durch einen oder mehrere elektrische Heizdrähte gebildet. Da die Rohre des Wettermastes 3 durch die Heizdrähte 7 direkt beheizt werden können, wird relativ wenig Heizleistung benötigt und die Heizleistung wird gezielt in dem Bereich der WindSensoren konzentriert.

Die Heizdrähte sind mit einer Spannungsquelle verbunden und getrennt von den Wettermasten geerdet. Der Blitzschutz wird somit nicht beeinträchtigt und auch die Heizdrähte sind gegen Blitzeinschlag geschützt (Faradayscher Käfig).

In einer bevorzugten Ausgestaltung ist die Heizung selbstregelnd ausgebildet. Durch den Einsatz selbstregelnder Heizbänder kann die Wärmeabgabe direkt an eine steigende oder fallende Temperatur der Wettermasten angepasst werden. Der Energieverbrauch der Heizung wird dadurch reduziert.

Alternativ kann die Heizung von einer separaten Steuereinrichtung oder von der Anlagensteuerung der Windenergieanlage geregelt werden.

In einer besonderen Ausgestaltung befinden sich mehrere Wettermasten auf der Windenergieanlage, deren Heizungen miteinander parallel geschaltet sind.

Durch die Beheizung der Wettermasten durch innenliegende Heizdrähte kann die Verfügbarkeit der Windenergieanlage verbessert werden, da der Betrieb nicht durch Eisansatz an den Wettermasten beeinträchtigt wird.

### Kurze Beschreibung der Abbildungen

Die Erfindung wird anhand von Zeichnungen näher erläutert. Hierzu zeigen
- Figur 1: eine schematische Darstellung einer Windenergieanlage,
- Figur 2: den Aufbau eines erfindungsgemäßen Wettermastes,
- Figur 3: ein Schaltbild mit schematischer Darstellung der Heizdrähte in Wettermasten.

### Ausführung der Erfindung

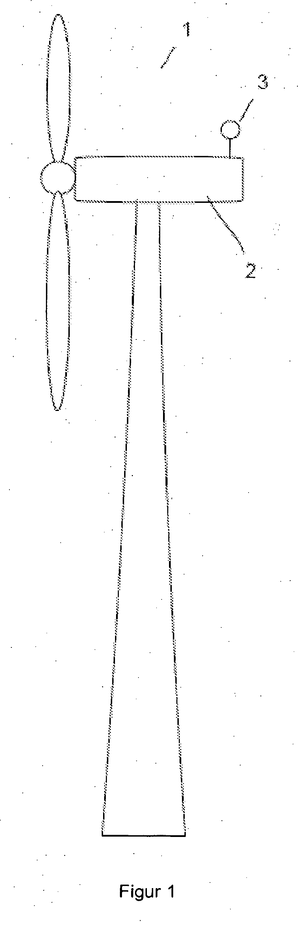

**Figur 1** zeigt eine schematische Darstellung einer Windenergieanlage 1 mit einem auf dem Dach der Gondel 2 befindlichen Wettermast 3.

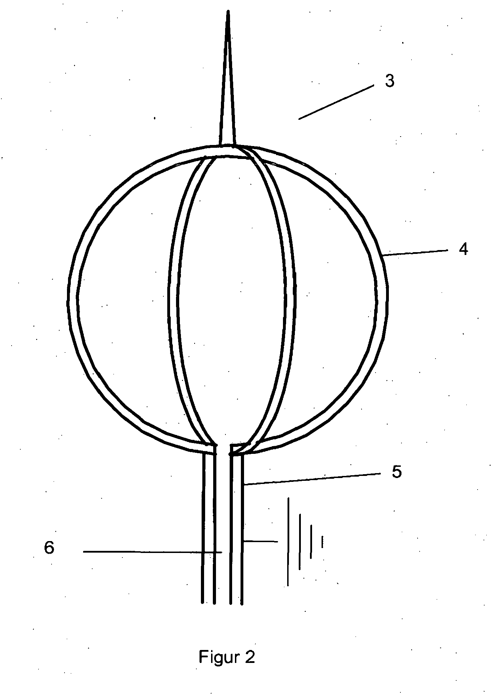

In **Figur 2** ist der Aufbau eines erfindungsgemäßen Wettermastes 3 dargestellt. Der Ständer 6 und der Blitzschutzkäfig 4 des Wettermastes bestehen aus Rohrleitungen 5, welche miteinander verbunden sind. Der Blitzschutzkäfig wird aus zwei kreisförmig gebogenen Rohrleitungen 5 gebildet, welche um 90° versetzt angeordnet sind. Möglich ist auch eine Anordnung im Winkel zwischen 60° und 90°.

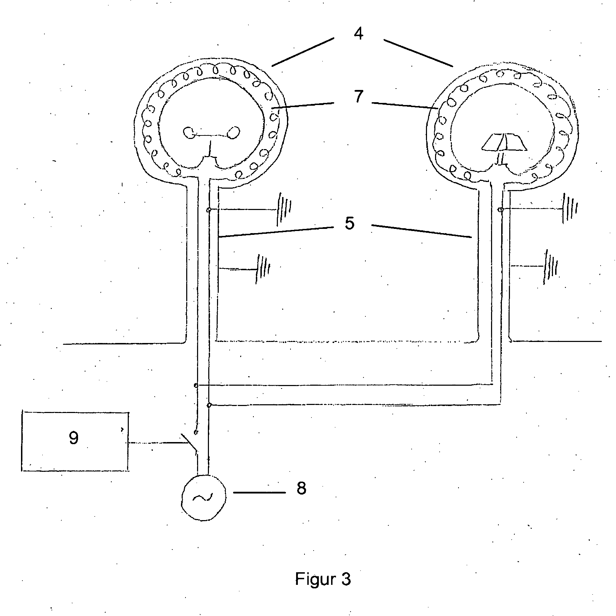

In **Figur 3** wird ein Ausführungsbeispiel der erfindungsgemäßen Lösung dargestellt. Auf der nicht dargestellten Gondel der Windenergieanläge sind zwei Wettermasten angeordnet. In die Rohrleitungen der Ständer 3 und der Blitzschutzkäfige 4 werden ein oder mehrere elektrische Heizdrähte 7 verlegt. Die Heizdrähte 7 der einzelnen Wettermasten 3 sind parallel geschaltet und mit einer Spannungsquelle 8 verbunden. Die Rohrleitung der Wettermasten 3 und die Heizdrähte 7 sind separat geerdet. Der Blitzschutz wird somit nicht beeinträchtigt und auch die Heizdrähte 7 sind gegen Blitzeinschlag geschützt (Faradayscher Käfig).

Im dargestellten Beispiel erfolgt die Die Steuerung der Heizung über die Anlagensteuerung 9 der Windenergieanlage. Ab einer einstellbaren Umweltbedingung (z.B. Temperaturschwelle) wird die Heizung zugeschaltet. So wird sichergestellt, dass die Messung der Windgeschwindigkeit und der Windrichtung nicht durch Eisansatz an den Wettermasten 3 beeinträchtigt wird, was zum Anlagenstillstand führt und einen Ertragsausfall bedeutet. In Kombination mit einem zuverlässigen Eiswarnsystem und einer intelligenten Ansteuerung kann der Energiebedarf für die Heizung weiter reduziert werden.

Die Heizdrähte 7 sind wartungsfrei und können im Schadensfall leicht ausgewechselt werden, ohne den Betrieb der Anlage zu gefährden.

### Bezugszeichen

- 1: Windenergieanlage
- 2: Gondel
- 3: Wettermast
- 4: Blitzschutzkäfig
- 5: Rohrleitung
- 6: Ständer
- 7: Heizdraht
- 8: Spannungsquelle
- 9: Anlagensteuerung

## Patentansprüche

1. Vorrichtung zur Beheizung eines Wettermastes auf einer Windenergieanlage
**dadurch gekennzeichnet, dass**
der Wettermast (3) aus einem Ständer (6) und einem Blitzschutzkäfig (4) besteht, welche durch miteinander verbundene Rohrleitungen (5) gebildet werden und dass in den Rohrleitungen (5) eine Heizung angeordnet ist.

2. Vorrichtung nach Anspruch 1, **dadurch gekennzeichnet, dass** die Heizung durch ein oder mehrere elektrische Heizdrähte (7) gebildet wird.

3. Vorrichtung nach Anspruch 2, **dadurch gekennzeichnet, dass** die elektrischen Heizdrähte (7) mit einer Spannungsquelle (8) verbunden und getrennt von den Wettermasten (3) geerdet sind.

4. Vorrichtung nach einem der Ansprüche 1 bis 3, **dadurch gekennzeichnet, dass** die Heizung selbstregelnd ist.

5. Vorrichtung nach einem der Ansprüche 1 bis 3 **dadurch gekennzeichnet, dass** die Heizung separat oder durch die Anlagensteuerung (9) der Windenergieanlage geregelt wird.

6. Vorrichtung nach einem der Ansprüche 2 bis 5, **dadurch gekennzeichnet, dass** mehrere Wettermasten auf der Windenergieanlage angeordnet und die Heizdrähte (7) der einzelnen Wettermasten (3) parallel geschaltet sind.

## Claims

1. Apparatus for heating a weather mast on a wind turbine, **characterized in that** the weather mast (3) comprises a stand (6) and a lightning protective cage (4) which are formed by interconnected pipings (5), and **in that** a heating system is arranged in the pipings (5).

2. Apparatus according to Claim 1, **characterized in that** the heating system is formed by one or more electric heating wires (7).

3. Apparatus according to Claim 2, **characterized in that** the electric heating wires (7) are connected to a power source (8) and connected to earth separately from the weather masts (3).

4. Apparatus according to one of Claims 1 to 3, **characterized in that** the heating system is self-regulating.

5. Apparatus according to one of Claims 1 to 3, **characterized in that** the heating system is controlled separately or by the control system (9) of the wind turbine.

6. Apparatus according to one of Claims 2 to 5, **characterized in that** a plurality of weather masts are arranged on the wind turbine and the heating wires (7) of the individual weather masts (3) are connected in parallel.

## Revendications

1. Dispositif de chauffage d'un mât météorologique sur une éolienne,
**caractérisé en ce que**
le mât météorologique (3) est constitué d'un support (6) et d'une cage de protection contre la foudre (4), lesquels sont formés par des conduites tubulaires (5) reliées les unes aux autres, et **en ce qu'**un chauffage est disposé dans les conduites tubulaires (5).

2. Dispositif selon la revendication 1, **caractérisé en ce que**
le chauffage est formé par un ou plusieurs fils chauffants électriques (7).

3. Dispositif selon la revendication 2, **caractérisé en ce que**
les fils chauffants électriques (7) sont connectés à une source de tension (8) et sont mis à la terre de manière séparée des mâts météorologiques (3).

4. Dispositif selon l'une quelconque des revendications 1 à 3, **caractérisé en ce que**
le chauffage est à régulation automatique.

5. Dispositif selon l'une quelconque des revendications 1 à 3, **caractérisé en ce que**
le chauffage est régulé séparément ou par la commande d'installation (9) de l'éolienne.

6. Dispositif selon l'une quelconque des revendications 2 à 5, **caractérisé en ce que** plusieurs mâts météorologiques sont disposés sur l'éolienne et les fils chauffants (7) des mâts météorologiques individuels (3) sont branchés en parallèle.
